# Europäisches Patentamt
## European Patent Office
## Office européen des brevets

(19)

(11) Veröffentlichungsnummer: **0 025 526**
**B1**

(12) **EUROPÄISCHE PATENTSCHRIFT**

(45) Veröffentlichungstag der Patentschrift: **20.01.88**

(51) Int. Cl.⁴: **F 02 C 7/32**

(21) Anmeldenummer: **80105002.2**

(22) Anmeldetag: **22.08.80**

(54) Gasturbineneinheit mit Hilfsaggregaten und Druckluftabzweigung oder unter Druck anstehendem Gas.

(30) Priorität: **06.09.79 DE 2936005**

(43) Veröffentlichungstag der Anmeldung:
**25.03.81 Patentblatt 81/12**

(45) Bekanntmachung des Hinweises auf die
Patenterteilung:
**20.01.88 Patentblatt 88/03**

(84) Benannte Vertragsstaaten:
**FR GB**

(56) Entgegenhaltungen:
**DE-A-1 020 035**
**DE-A-1 782 429**
**DE-A-2 444 113**
**DE-A-2 919 289**
**FR-A-2 220 674**
**US-A-2 803 110**
**US-A-2 942 553**
**US-A-3 019 735**
**US-A-4 091 613**

(73) Patentinhaber: **Klöckner-Humboldt-Deutz
Aktiengesellschaft
Deutz-Mülheimer-Strasse 111 Postfach 80 05 09
D-5000 Köln 80 (DE)**

(72) Erfinder: **Oberländer, Georg
Parkstrasse 22
D-5060 Berg.-Gladbach 1 (DE)**

(56) Entgegenhaltungen:
**Dubbel, Taschenbuch für den Maschinenbau,
berichtigtes Neudruck der 13. Auflage, Zweiter
Band, 1974, Springer Verlag Berlin-Heidelberg-
New York, S. 255, Fig. 22.**

**The Fet Engine, 3rd Edition, reprinted with
revision, 1973, Rolls Royce (1971), Ltd. pages
49-54, 103-105**

**VDI-ZEITSCHRIFT, Band 119, Nr. 11, Juni 1977
F. PORCHET "Gasturbinen mit integrierten
Hilfssystemen" Seiten 545 bis 552
AUTOMOTIVE ENGINEERS, Band 87, Nr. 11
November 1979 Seiten 36 bis 39**

## Beschreibung

Die Erfindung betrifft eine Gasturbineneinheit gemäß dem Oberbegriff des Anspruchs 1. Eine ähnliche Anlage geht hervor aus der FR—A—2.220.674.

Aus der US—A 3,019,735 ist eine hydraulisch angetriebene Pumpe zur Verwendung in Raketentriebwerken bekannt. Dabei wird ein aus einem Vorratsbehälter über eine Zuführungsleitung in die Pumpe gelangendes Hydraulikfluid von Verdrängerkolben in eine Auslaßleitung gefördert. Die Verdrängerkolben werden von jeweils einem zugeordneten Arbeitskolben bewegt und sind jeweils mit einem Verdrängerkolben zu einem Stufenkolben zusammengefaßt, wobei diese über Verbindungselemente miteinander verbunden sind. Das an den Arbeitskolben Arbeit verrichtende Arbeitsmedium wird über eine aufwendige Steuereinrichtung, die aus zumindest drei voneinander unabhängigen Steuerventilen besteht, den jeweiligen Arbeitsräumen zugeführt. Dabei erfolgt die notwendige Umsteuerung der Steuerventile über ein mechanisches Steuerteil, daß mit den Verbindungselementen der Stufenkolben mechanisch verbunden ist. Diese Pumpe hat den Nachteil einer sehr aufwendigen, aus vielen mechanisch bewegten und geschalteten Teilen bestehenden, Steuerung des Arbeitsmediums. Einerseits ist die Steuereinrichtung wegen der vielen bewegten Teile störanfällig und wegen der rein mechanischen Umschaltvorrichtung auch verschleißintensiv; zum anderen sind die Arbeits- und Verdrängerkolben jeweils nur einfach wirkend und können somit nur in jeweils einer Bewegungsrichtung Arbeit verrichten. Dementsprechend müssen die Kolben zur Erzielung hoher Förderleistungen entsprechend großvolumig ausgebildet sein bzw. es müssen mehrere zusammenwirkende Arbeits- Verdrängerkolben- Einheiten in eine Pumpe eingebaut werden. Dies verursacht zusammen mit der komplizierten Steuerung eine insgesamt aufwendige und von der Baugröße her große Pumpe.

Der Erfindung liegt die Aufgabe zugrunde, eine Gasturbineneinheit mit einer anzutreibenden Pumpe bereitzustellen, deren Antrieb und Steuerung konstruktiv einfach und verschleißarm bei geringem Bauvolumen ausgebildet sein soll.

Diese Aufgabe wird erfindungsgemäß dadurch gelöst, daß die Steuereinrichtung als elektromagnetisch betätigtes 5/2-Wegeventil ausgebildet ist, wobei die elektrische Ansteuerung des Wegeventils von induktiven Wegaufnehmern erfolgt, die an Zylindern angeordnet sind und in den Endlagen der Kolben Steuerimpulse abgeben, wobei die Pumpe weiterhin aus einem Arbeitskolben und zwei Verdrängerkolben aufgebaut ist, wobei jeder Kolben den jeweils zugeordneten Zylinder in zwei genutzte Arbeitsräume aufteilt. Durch diese erfindungsgemäße Ausbildung sind die in der US—A 3,019,735 vorhandenen Nachteile vermieden. Die Steuereinrichtung für die Pumpe besteht aus einem einzigen 5/2-Wegeventil, das elektromagnetisch von an dem Arbeitszylinder bzw. an den Verdrängungszylindern angeordneten induktiven Wegaufnehmern betätigt wird. Dabei stellen die induktiven Wegaufnehmer eine weitgehend verschleißarme Schaltvorrichtung dar. Weiterhin sind die Arbeits- und Verdrängungskolben so mit einer Kolbenstange verbunden, daß jeder Kolben den jeweils zugeordneten Zylinder in zwei Arbeitsräume aufteilt. Da somit die Kolben in jeder Bewegungsrichtung Arbeit verrichten, können die Kolben und die jeweiligen Zylinder gegenüber nur einwegig Arbeit verrichtenden Kolben mit einem kleineren Durchmesser bei gleicher Förderleistung ausgebildet werden. Dies ermöglicht zusammen mit der aus einem einzigen 5/2-Wegeventil bestehenden Schaltvorrichtung einen kompakten Aufbau der Pumpe.

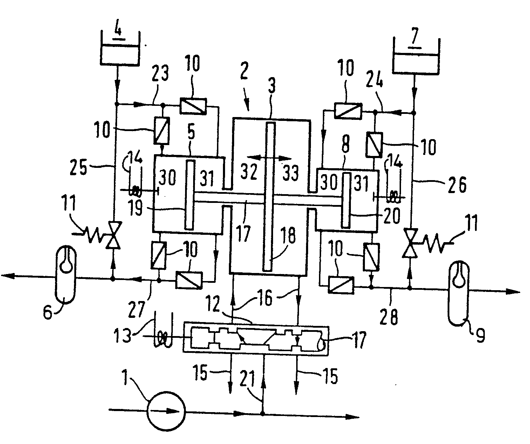

Weitere erfindungsgemäße Ausgestaltungen der Erfindung ergeben sich aus der Zeichnungsbeschreibung, in der das in der Abbildung dargestellte Ausführungsbeispiel der Erfindung beschrieben ist.

Eine Druckluftabzweigung 21 führt nach dem Austritt aus dem Verdichter 1 zu einem in Doppelweise ausgeführten 3/2-Wegeventil — also einem 5/2-Wegeventil 12 —, dessen Steuerschieber 17 jeweils eine zum Arbeitszylinder 3 führende Zuführungsleitung 16 mit der Druckluftabzweigung 21 und die andere zum Arbeitszylinder 3 führende Zuführungsleitung 16 mit einer der Entlüftungsleitungen 15 verbindet. Umgesteuert wird das 5/2-Wegeventil 12 von einem Steuermagneten 13. Der Steuermagnet 13 erhält Schaltimpulse von den induktiven Wegaufnehmern 14, die bei Annäherung der Verdrängerkolben 19, 20 an die Wände der Verdrängungszylinder 5, 8 Schaltimpulse abgeben. Im Arbeitszylinder 3 bildet der Kolben 18, der über die Kolbenstange 17 mit den Kolben 19, 20 der Verdrängungszylinder 5, 8 verbunden ist, zwei veränderliche Arbeitszylinderräume 32, 33. Auf die gleiche Weise bilden die Kolben 19, 20 jeweils 2 Verdrängungszylinderräume 30, 31. Von Vorrats- oder Sammelbehältern 4, 7 führen Saugleitungen 23, 24 zu den Verdrängungszylinderräumen 30, 31 der Verdrängerzylinder 5, 8 und von dort Druckleitungen 27, 28 über Druckausgleichsbehälter 6, 9 zu den Verbrauchern. In den Saug- und Druckleitungen 23, 24, 27, 28 sind Rückschlagklappen 10 angeordnet. Kurzschlußleitungen 25, 26 mit Überdruckventilen 11 zwischen Saugleitungen 23, 24 und Druckleitungen 27, 28 begrenzen den Förderdruck.

## Patentansprüche

1. Gasturbineneinheit mit einer pneumatisch antreibbaren Pumpe, mit einer von dem Verdichter (1) der Gasturbineneinheit versorgten Druckluftabzweigung (21), die über eine Steuereinrichtung mit einem Arbeitsraum (32, 33) eines Arbeitszylinders (3) verbindbar ist, wobei in dem Arbeitszylinder (3) ein Arbeitskolben (18) angeordnet ist, der mit zumindest einem in einem Verdrängungsraum (30, 31) angeordneten Verdrängerkolben (19, 20) über eine Kolbenstange (17) verbunden ist,

dadurch gekennzeichnet, daß die Steuereinrichtung als elektromagnetisch betätigtes 5/2-Wegeventil (12) ausgebildet ist, wobei die elektrische Ansteuerung des Wegeventils (12) von induktiven Wegaufnehmern (14) erfolgt, die an Zylindern (3, 5, 8) angeordnet sind und in den Endlagen der Kolben (18, 19, 20) Steuerimpulse abgeben, und daß die Pumpe aus einem Arbeitskolben (18) und zwei Verdrängerkolben (19, 20) aufgebaut ist, wobei jeder Kolben (18, 19, 20) den jeweils zugeordneten Zylinder (3, 5, 8) in zwei genutzte Arbeitsräume (30, 31 und 32, 33) aufteilt.

2. Gasturbineneinheit nach Anspruch 1, dadurch gekennzeichnet, daß das elektromagnetisch betätigte 5/2-Wegeventil (12) mit einem gemeinsamen Eingangsanschluß an die Druckleitung (21) für die vom Verdichter (1) abgezweigte Druckluft, mit je einem Ausgangsanschluß an eine Zuführungsleitung (16) zu einem Arbeitsraum (32, 33) der Pumpe und mit je einem Entlüftungsanschluß an eine Entlüftungsleitung (15) angeschlossen ist, und daß das 5/2-Wegenventil (12) in den beiden Stellungen seines Steuerschiebers jeweils wechselseitig die eine Zuführungsleitung (16) mit der Druckleitung (21) und die andere Zuführungsleitung (16) mit einer Entlüftungsleitung (15) verbindet.

## Revendications

1. Turbine à gaz avec une pompe à entraînement pneumatique, comportant un embranchement d'air comprimé (21) qui est alimenté par le compresseur (1) de la turbine à gaz et qui peut être relié, par l'intermédiaire d'un dispositif de commande, avec une chambre de travail (32, 33) d'un cylindre de travail (3) étant précisé que dans le cylindre de travail (3) est disposé un piston de travail (18) qui est relié, par l'intermédiaire d'une tige de piston (17), avec au moins un piston de refoulement (19, 20) disposé dans une chambre de refoulement (30, 31),

caractérisée en ce que le dispositif de commande est conçu sous forme de robinet distributeur 5/2 à manoeuvre électromagnétique (12), étant précisé que la commande électrique du robinet distributeur (12) est assurée par des détecteurs inductifs de course (14) qui sont disposés dans les cylindres (3, 5, 8) et qui, dans les positions d'extrémité des pistons (18, 19, 20) émettent des impulsions de commande; et en ce que la pompe est constituée d'un piston de travail (18) et de deux pistons de refoulement (19, 20), chaque piston (18, 19, 20) divisant le cylindre respectivement correspondant (3, 5, 8) en deux chambres de travail utiles (30, 31 et 32, 33).

2. Turbine à gaz selon la revendication 1, caractérisée en ce que le robinet distributeur 5/2 à manoeuvre électromagnétique (12) est relié à un raccord d'entrée commun sur la conduite sous pression (21) pour l'air comprimé provenant du compresseur (1), à, chaque fois, un raccord de sortie sur une conduite d'alimentation (6) d'une chambre de travail (32, 33) de la pompe et, chaque fois, à un raccord de mise à l'air libre sur une conduite de mise à l'air libre (15); et en ce que le robinet distributeur 5/2 (12), dans les deux positions de son tiroir de commande, relie respectivement et alternativement l'une des conduites d'alimentation (16) avec la conduite sous pression (21) et l'autre conduite d'alimentation (16) avec une conduite de mise à l'air libre (15).

## Claims

1. A gas turbine unit with a pneumatically-drivable pump and with a compressed-air branch (21) supplied by the compressor (1) of the gas turbine unit, which branch is connectable by way of a control device with a working chamber (32, 33) of a working cylinder (3) while, in the working cylinder (3), a working piston (18) arranged therein is connected by a piston rod (17) with at least one displacement piston (19, 20) arranged in a displacement chamber (30, 31), characterised in that the control device is formed as an electromagnetically actuated 5-port/2-position directional control valve (12), and the electric actuation of the directional control valve (12) is effected by inductive motion detectors (14) which are arranged on cylinders (3, 5, 8) and which, in the end positions of the pistons (18, 19, 20), deliver control pulses, and that the pump is constructed to have a working piston (18) and two displacement pistons (19, 20) with each piston (18, 19, 20) dividing the respectively associated cylinder (3, 5, 8) into two usable working chambers (30, 31 and 32, 33).

2. A gas turbine unit according to Claim 1, characterised in that the electro-magnetically actuated 5-port/2-position directional control valve (12) is connected by a common entry connection to the pressure conduit (21) for the compressed air branched off from the compressor (1), with an outlet connection in each case to feed conduit (16) for a working chamber (32, 33) of the pump and with a vent connection in each case to a vent conduit (15), and that the 5-port/2-position directional control valve (12), in each of the two positions of its control slider, alternately connects the one feed conduit (16) with the pressure conduit (21) and the other feed conduit (16) with a vent conduit (15).